# EUROPÄISCHE PATENTSCHRIFT

(11) **EP 0 774 414 B1**
(45) Veröffentlichungstag und Bekanntmachung des Hinweises auf die Patenterteilung: **09.08.2000**
(21) Anmeldenummer: 96810601.3
(22) Anmeldetag: 11.09.1996
(51) Int. Cl.: B65B 19/34, B65B 5/08, B65G 47/26

(54) **Verfahren und Maschine zur Abpackung von Dosen oder Tuben**
Method and apparatus for packaging tins or tubes
Procédé et appareil pour emballer des boîtes de conserves ou des tubes

(30) Priorität: 17.11.1995 CH 326495
(43) Veröffentlichungstag der Anmeldung: 21.05.1997
(73) Patentinhaber: HINTERKOPF GmbH, 73054 Eislingen (DE)
(72) Erfinder: Benz, Gottlieb, 8890 Flums (CH)
(74) Vertreter: Vetter, Hans, Dipl.-Phys. Dr.

(56) Entgegenhaltungen:
- EP-A- 0 644 120
- DE-B- 1 240 462
- FR-A- 1 495 501
- FR-A- 2 495 586

## Beschreibung

Die vorliegende Erfindung betrifft ein Verfahren zur Abpackung von Dosen oder Tuben gemäss Oberbegriff des Patentanspruches 1. Es betrifft zudem eine Vorrichtung zur Durchführung des Verfahrens gemäss Oberbegriff des Patentanspruches 7.

Die Anmelderin hat vorgängig eine Verpackungsmaschine für Tuben oder Dosen gefertigt, die bei einfachster Bedienung einen hohen Durchsatz aufweist, die Tuben oder Dosen jedoch schonend behandelt. Zudem können die Dosen oder Tuben mit dieser Verpackungsmaschine auf unterschiedliche Art und Weise verpackt werden, wie zum Beispiel in Kartons verschiedenster Dimensionen oder sie können umreift werden.
Diese Verpackungsmaschine besteht im wesentlichen aus einer Zwischenstation mit einem schrittweise bewegbaren Endlosband, auf dem Aufnahmeelemente angeordnet sind, einer Greifvorrichtung, einer Abgabestation mit einem Ablagetisch, auf dem Trägerelemente angeordnet sind, und einem Schieber. Die Dosen oder Tuben gelangen kontinuierlich von einer Produktionsanlage in die schrittweise bewegten Aufnahmeelemente. Befindet sich die gewünschte Anzahl der Dosen oder Tuben, die eine Verpackungsschicht bilden soll, in den Aufnahmeelementen, so wird diese Gruppe von der Greifvorrichtung mittels Vakuumsaugnäpfen zu der Abgabestation transportiert, wo jede Dose oder Tube in ein Trägerelement abgelegt wird. Währenddessen wird die als Kompensator wirkende Zwischenstation wiederum mit neu ankommenden Dosen oder Tuben gefüllt.
Die in der Abgabestation befindlichen Dosen oder Tuben werden mittels des Schiebers quer zu ihrer Anordnungsrichtung in die Abfüllstation geschoben. Je nach Verpackungsart gelangen sie dabei in den bereitstehenden Karton oder, falls sie umreift werden sollen, in eine entsprechende Umreifungslehre. Bevor die Dosen oder Tuben vom Ablagetisch geschoben werden, wird dieser in die gewünschte horizontale Position relativ zur Abfüllstation gebracht. Dadurch wird eine seitliche Verschiebung der einzelnen Schichten entsprechend dem Durchmesser der Dosen oder Tuben erhalten, wodurch eine dichte und stabile Schichtung ermöglicht wird.

Dieses Verfahren lässt sich auf die unterschiedlichsten Abmessungen von Dosen oder Tuben anwenden. Diese Verpackungsmaschine weist jedoch den Nachteil auf, dass bei Wechsel der Dosen- oder Tubenabmessungen das Endlosband der Aufnahmeelemente, die Vakuumsaugnäpfe und auch der Ablagetisch ausgewechselt werden muss. Diese Umrüstung benötigt einen gewissen Zeitraum, in der die Maschine stillsteht. Zudem muss die Umrüstung durch Fachpersonal durchgeführt werden. Des weiteren müssen diese Abpackmaschinen mit viel Zubehör für die unterschiedlichen Dosendurchmesser ausgerüstet werden, was sich auf den Verkaufspreis auswirkt.

Es ist deshalb Aufgabe der Erfindung, ein Verfahren und eine Vorrichtung zu schaffen, die einen einfachen Wechsel der Dosen- oder Tubenart erlauben.

Diese Aufgabe löst ein Verfahren mit den Merkmalen des Patentanspruches 1 und eine Vorrichtung mit den Merkmalen des Patentanspruches 7.

Das erfindungsgemässe Verfahren verwendet eine flexible Abgabestation, die sich automatisch auf die entsprechenden Durchmesser der Dosen oder Tuben einstellt. Die Dosen und Tuben werden stets, unabhängig von ihrem Durchmesser, in gleichbleibendem, von ihrem Mittelpunkt aus gerechneten Abstand in die Zwischenstation eingelegt. Dies wird beispielsweise durch die Verwendung von Prismen als Aufnahmeelemente ermöglicht. Dadurch kann dieselbe Greifvorrichtung für verschiedene Dosen- oder Tubendurchmesser verwendet werden, ohne dass die Abstände der Vakuumsaugnäpfe geändert werden müssen.

Bei der Uebergabe der Dosen oder Tuben sind die Trägerelemente der Abgabestation im gleichen Abstand angeordnet wie die Aufnahmeelemente der Zwischenstation, so dass die Gruppe der Tuben oder Dosen unverändert in sie abgelegt werden kann. Da die Tuben oder Dosen jedoch in der Verpackung dicht aneinanderliegen sollen, werden anschliessend die Trägerelemente bis zur Berührung zusammengefahren.
Es können somit dasselbe Prismenband und wesentliche Teile der Abgabestation für unterschiedliche Dosen- oder Tubendurchmesser verwendet werden. Bei einem Wechsel der Dosen- oder Tubendurchmesser müssen somit lediglich die Trägerelemente ausgewechselt werden. Diese können jedoch auswechselbare Schalen aufweisen, so dass die Umrüstung von jedermann durchgeführt werden kann.

Die für die Einstellung der Abstände notwendige Steuerung ist äusserst einfach und durch mechanische Mittel, wie eine einfache Verbindungskette, zwischen den Trägerelementen erreichbar.
Die obere Grenze der verpackbaren Dosen oder Tuben wird bei diesem Verfahren durch den maximal erreichbaren Abstand der Trägerelemente sowie durch den fixen Abstand der Aufnahmeelemente der Zwischenstation gegeben. Die untere Grenze ist dadurch gegeben, welche Durchmessergrössen in einer definierten Lage in den Aufnahmeelmenten und Trägerelementen noch gehalten werden können.

In den beiliegenden Zeichnungen ist ein Ausführungsbeispiel des Erfindungsgegenstandes dargestellt, anhand dessen das erfindungsgemässe Verfahren erläutert wird. Es zeigen
- Figur 1: eine schematische Darstellung der erfindungsgemässen Vorrichtung von der Seite, integriert in einer Produktionanlage;
- Figur 2: eine Abgabestation der Vorrichtung nach Figur 1 von der Seite vor der Uebergabe der Dosen an die Abgabestation;
- Figur 3: die Abgabestation nach Figur 2 von der Seite nach der Uebergabe der Dosen an die Abgabestation und
- Figur 4: die Abgabestation nach Figur 2 von oben.

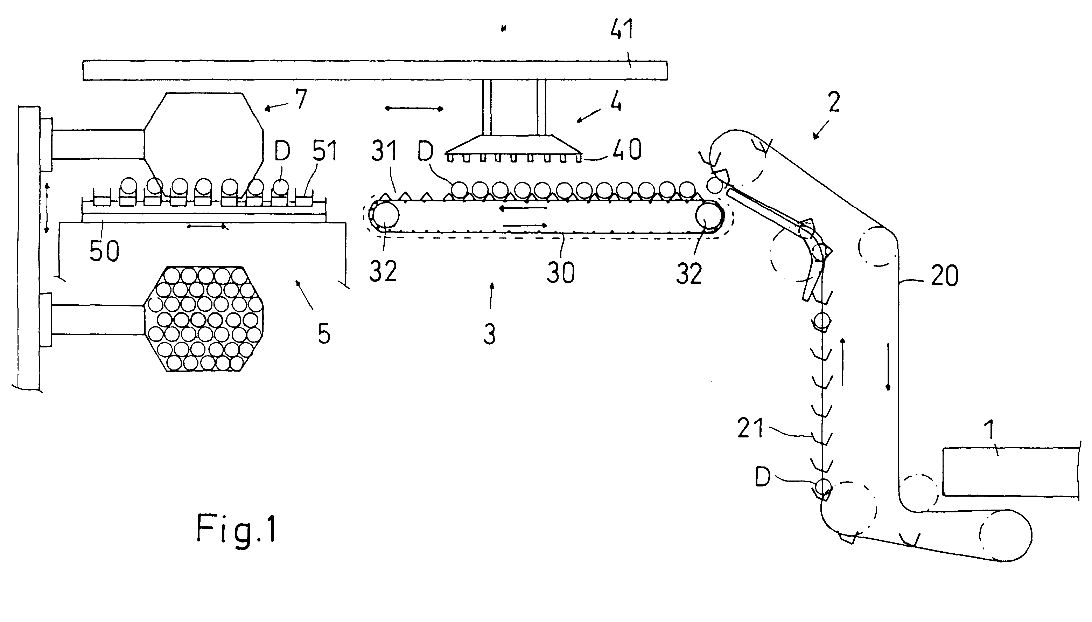

In Figur 1 ist der gesamte Aufbau der erfindungsgemässen Vorrichtung ersichtlich. Von einer Transportanlage 1 werden die Dosen von der Produktionsstätte zur Abpackmaschine gebracht. Eine Uebergabestation 2 übernimmt die kontinuierlich angelieferten Dosen D, wobei jede Dose D in eine Uebergabeschale 21 aufgenommen wird. Die Uebergabeschalen 21 sind Teil einer endlosen Uebergabeschlaufe 20, die die gefüllten Schalen kontinuierlich und nacheinander zu einer Zwischenstation 3 transportiert.

Die Uebergabeschalen 21 entleeren beim Durchgang durch die Schlaufe ihre Dosen D auf die Zwischenstation 3, wobei jede Dose D in ein Aufnahmeelement 31 abgegeben wird. Diese Zwischenstation 3 weist hierfür ein endloses Prismenband 30 auf, das auf Antriebswalzen 32 angeordnet ist und von diesem schrittweise betrieben wird. Das Prismenband ist bevorzugterweise aus Kunststoff gefertigt und weist an seiner, den Antriebswalzen zugewandten Seite in diese eingreifende Nocken auf.
Die Bewegungsrichtung des schrittweisen Transports der Dosen ist in Figur 1 mit einem Pfeil gekennzeichnet und ist in horizontaler Richtung von der Uebergabestation weggerichtet, so dass die Dosen kontinuierlich auf das Prismenband gelegt werden können.

Die von den Prismen gebildeten Zwischenräume bilden die Aufnahmeelemente 31 der Zwischenstation. Diese keilförmigen Zwischenräume ermöglichen es, dass mit demselben Prismenband Dosen mit unterschiedlichen Durchmessern aufgenommen und transportiert werden können. Die Dosen kommen hierbei stets mittig in den Zwischenräumen zu liegen, wobei die kleineren Dosen tiefer als die grösseren in das Prismenband einsinken.

Ein Schrittzähler oder auch ein optischer Sensor überwacht die Anzahl der auf dem Prismenband befindlichen Dosen D. Ist die gewünschte Stückzahl erreicht, die anschliessend in der Verpackung eine Schicht bilden soll, so wird eine Greifvorrichtung 4 betätigt. Diese Greifvorrichtung 4 umfasst mehrere gleichabständige Vakuumsaugnäpfe 40, die jede eine Dose D ansaugt. Die Saugnäpfe 40 transportieren die gewünschte Anzahl Dosen D als Gruppe zu einer Abgabestation 5. Hierfür wird die Greifvorrichtung 4 entlang einer horizontalen Achse 41 bewegt.
Zwischenzeitlich wird das Prismenband weiterhin kontinuierlich aufgefüllt.
In einer bevorzugten Ausführungsform ist die Greifvorrichtung 4 zusätzlich dreh- oder schwenkbar. In einer weiteren Ausführungsform sind die Saugnäpfe des Saugvorrichtung 4 in ihrer Lage zueinander veränderbar, so dass ihre gegenseitigen Abstände mechanisch oder elektronisch verändert werden können.

Der Druck in den Vakuumsaugnäpfen 40 wird überwacht. Sollte ein Aufnahmeelement keine oder eine schadhafte Dose enthalten, so wird eine Fehlermeldung ausgegeben. Ebenso wird anhand der Vakuumsaugnäpfe bestimmt, wieviele Dosen mitgenommen werden.
Ueberzählige Saugnäpfe werden nicht aktiviert. Dies ist notwendig, da die Gebindegrössen variieren und da gewisse Abpackungen Schichten mit unterschiedlichen Stückzahlen aufweisen, beispielsweise die hier dargestellte Achteckumreifung. Zudem passen sich die Vakuumsaugnäpfe automatisch oder durch Voreinstellung den unterschiedlichen Greifhöhen für die Dosen an.

Die Abgabestation 5 umfasst einen Ablagetisch 50, auf dem Trägerelemente 51 zur Aufnahme der Dosen D angeordnet sind.
Mittels einem Schieber 6 werden die Dosen quer zur Richtung ihrer Anordnung in eine Abfüllstation 7 geschoben, wobei diese Abfüllstation 7 je nach Bedarf Gebinde oder auch Lehren zur Umreifung der Dosen aufweisen kann.

Im folgenden wird der Ablagetisch 50 mit den Trägerelementen 51 näher beschrieben:
Die Trägerelemente 51 sind in Richtung der Anordnung der Dosen gegeneinander verschiebbar gelagert. Bevorzugterweise ist das mittlere Trägerelement fixiert gehalten. Sie bestehen aus Trägerplatten 512, auf denen auswechselbare Ablageschalen 510 angeordnet sind. Die Ablageschalen 510 weisen in diesem Ausführungsbeispiel hierfür Stifte 511 auf, die in entsprechende Bohrungen der Trägerplatten 512 einsteckbar sind. In diese Ablageschalen 510 werden die Dosen D abgelegt. Jede Ablageschale 510 weist deshalb eine Mulde entsprechend dem speziellen Durchmesser der zu verpackenden Dosen auf, wobei die Mulde mindestens an einem schmalen Enden der Ablageschalen keine Erhöhung aufweist, damit die Dose aus der Schale geschoben werden kann.

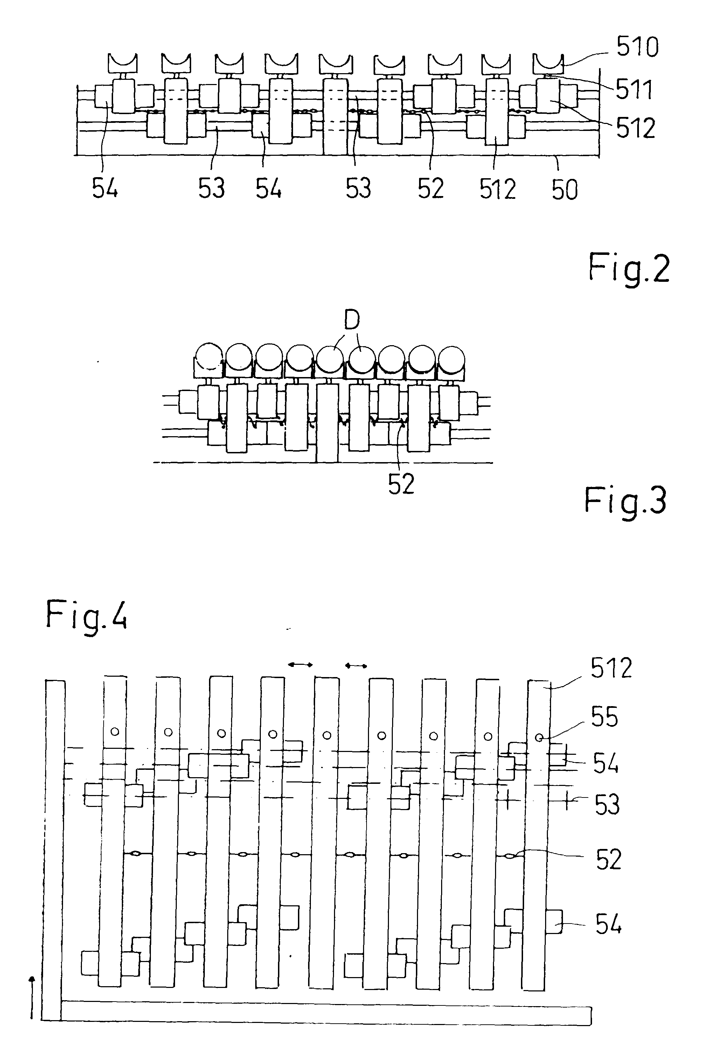

Die länglichen Trägerplatten 512 sind mittels sie durchsetzenden Antriebsstangen 53 verschiebbar miteinander verbunden, welche pneumatisch betätigbar sind. Bevorzugterweise werden benachbarte Trägerplatten durch unterschiedliche Antriebsstangen betätigt. Dadurch ist es möglich, die Trägerplatten sehr schmal auszubilden, ohne dass die Länge der Antriebszylinder 530 der Antriebsstangen 53 eine untere Begrenzung bilden könnte. In diesem Beispiel sind deshalb, wie in Figur 2 ersichtlich ist, an beiden Enden der Trägerplatten 51 je vier Antriebsstangen vorhanden, so dass jede vierte Trägerplatte 51 über dieselbe Antriebsstange 53 betätigt wird.

Die Trägerplatten 512 sind untereinander mit einer Kette 52, hier einer Gliederkette, verbunden, wobei benachbarte Trägerplatten aneinandergebunden sind. Die Kette 52 dient dazu, den maximal erreichbaren Abstand der Trägerplatten zu definieren.
Dabei ist die Länge der einzelnen Abschnitte der Kette 52 so bemessen, dass bei maximalem Abstand der Trägerplatten 512 und somit der Trägerelemente 51 diese gleich angeordnet sind wie die Prismen der Zwischenstation 3. In den Figuren 2 und 4 ist eine derartige Situation dargestellt. In dieser Position können nun die Dosen D vom Prismenband 31 zu den Ablageschalen 510 transportiert werden, ohne dass ihre relative Lage zueinander verändert werden müsste, da Prismenband und Ablagetisch miteinander kompatibel sind.

Anschliessend werden die Trägerplatten 512 mit den Ablageschalen 511 zusammengefahren, bis die Ablageschalen 511 sich gegenseitig berühren. Da die Ablageschalen speziell auf die Grösse der Dosen angepasst sind, sind diese nun dicht genug beieinander, um gruppiert als Schicht in die Abfüllstation 7 weitergegeben zu werden. Diese Situation ist in Figur 3 dargestellt. Falls Dosen mit einem anderen Durchmesser abgepackt werden sollen, so müssen lediglich die Ablageschalen ausgewechselt werden, was durch einfaches Aufstecken auf die Trägerplatten erfolgen kann.

Damit die Dosen in ihrer Lage in den Trägerelementen 51 gehalten werden und bei der Abgabe von der Greifvorrichtung nicht hüpfen, weisen Trägerplatten 512 und Ablageschalen 511 Saugöffnungen auf, so dass die Dosen durch Erzeugung eines Unterdruckes in den Mulden gehalten werden.

Da die einzelnen Schichten im allgemeinen um den halben Durchmesser einer Dose versetzt zueinander gestapelt werden sollen, werden die zusammengeschobenen Trägerelemente 51 gemeinsam oder der gesamte Ablagetisch wird noch um die gewünschte Distanz in horizontaler Richtung verschoben. Eine vertikale Verschiebung wäre auch möglich, diese wird jedoch im allgemeinen in der Abfüllstation ausgeführt.

In einer weiteren, hier nicht dargestellten Ausführungsform der erfindungsgemässen Vorrichtung befinden sich die Zwischenstation 3 und die Abgabestation 5 nicht in einer Linie parallel zur Anordnungsrichtung der Dosen, sondern sie sind senkrecht dazu angeordnet. Dadurch wird die gesamte Länge der Abpackmaschine verkürzt. Der Schieber 6 befindet sich zwischen den zwei Stationen.

## Patentansprüche

1. Verfahren zur Abpackung von Dosen oder Tuben, welche kontinuierlich von einer Produktionsanlage in schrittweise bewegte Aufnahmeelemente (31) einer Zwischenstation (3) gelangen, von wo die Dosen oder Tuben entsprechend der gewünschten Anzahl einer Verpackungsschicht gruppiert mittels einer Greifvorrichtung (4) zu einer Abgabestation (5) gebracht werden, wo jede Tube oder Dose in ein Trägerelement (51) abgelegt wird, worauf die Dosen oder Tuben gemeinsam von den Trägerelementen in eine Abfüllstation (7) gelangen,
dadurch gekennzeichnet,
dass die Dosen oder Tuben in gleichbleibendem Abstand in die Aufnahmeelemente (31) gelegt werden,
dass die einzelnen Trägerelemente (51) voneinander um einen vorbestimmten Abstand distanziert werden, worauf die Dosen oder Tuben in dem durch die Aufnahmeelemente (4) vorgegebenen Abstand in die Trägerelemente (51) abgelegt werden,
und dass anschliessend die Trägerelemente (51) bis zur gegenseitigen Berührung zusammengefahren werden, worauf die Dosen oder Tuben in die Abfüllstation (7) geschoben werden.

2. Verfahren nach Anspruch 1, dadurch gekennzeichnet, dass die Dosen oder Tuben vor der Verschiebung in die Abfüllstation (7) mittels der Trägerelemente (51) in die gewünschte Position relativ zur Abfüllstation (7) gebracht werden.

3. Verfahren nach Anspruch 2, dadurch gekennzeichnet, dass die die Positionierung der Dosen oder Tuben relativ zur Abfüllstation (7) in horizontaler Richtung erfolgt und dass die Abfüllstation (7) vertikal positioniert wird.

4. Verfahren nach Anspruch 1, dadurch gekennzeichnet, dass die Dosen oder Tuben durch Vakuumansaugung mit der Greifvorrichtung (3) transportiert werden.

5. Verfahren nach Anspruch 1, dadurch gekennzeichnet, dass die Dosen oder Tuben mittels Vakuumansaugung in den Trägerelementen (51) gehalten werden.

6. Verfahren nach Anspruch 1, dadurch gekennzeichnet, dass ein mittleres Trägerelement (51) in Ruhe bleibt.

7. Vorrichtung zur Durchführung des Verfahrens nach einem der Ansprüche 1 bis 6, mit einer Zwischenstation (3) mit schrittweise bewegbaren Aufnahmeelementen (31), mit einer Greifvorrichtung (4), einer Abgabestation (5) mit Trägerelementen (51) und einem Schieber (6),
dadurch gekennzeichnet,
dass die Zwischenstation (3) ein endloses Prismenband (30) umfasst, wobei die durch die Prismen gebildeten Zwischenräume die Aufnahmeelemente (31) bilden,
dass die Trägerelemente (51) gegeneinander verschiebbar angeordnet sind, wobei mindestens ein Mittel (52) zur Definierung des maximalen Abstandes der Trägerelemente (51) voneinander vorhanden sind.

8. Vorrichtung nach Anspruch 7, dadurch gekennzeichnet, dass die Trägerelemente (51) Trägerplatten (512) und darauf aufsteckbare, auswechselbare Ablageschalen (510) zur Aufnahme der Dosen oder Tuben umfassen.

9. Vorrichtung nach Anspruch 7, dadurch gekennzeichnet, dass die Trägerelemente (51) mittels einer Kette (52) miteinander verbunden sind, die den maximalen Abstand der Trägerelemente (51) zueinander bestimmt.

10. Vorrichtung nach Anspruch 7, dadurch gekennzeichnet, dass die Trägerelemente (51) mittels mindestens einer pneumatisch betriebenen Antriebsstange (53) verschiebbar sind.

11. Vorrichtung nach Anspruch 7, dadurch gekennzeichnet, dass mehrere Antriebsstangen (53) vorhanden sind, wobei benachbarte Trägerelemente (51) von verschiedenen Antriebsstangen (53) betrieben werden.

12. Vorrichtung nach Anspruch 7, dadurch gekennzeichnet, dass Zwischenstation (3) und Abgabestation (5) in einer Linie senkrecht zur Anordnungsrichtung der Aufnahme- (31) und Trägerelemente (51) angeordnet sind.

## Claims

1. Method for the packing of tins or tubes which continually arrive from a production line in holding elements (31), moving step-by-step, at an intermediate station (3), from where the tins or tubes are brought, grouped according to the desired number in a packing layer, by a gripping device (4) to a handover station (5), where each tube or tin is placed in a carrier element (51), after which the tins or tubes are brought together by the carrier elements to a filling station (7),
characterized in that
the tins or tubes are placed in the holding elements (31) with constant spacing, the individual carrier elements (51) are held apart from one another at a predetermined distance, whereupon the tins or tubes are placed in the carrier elements (51) at the spacing preset by the holding elements (4),
and finally the carrier elements (51) are moved together until they make contact with one another, whereupon the tins or tubes are pushed into the filling station (7).

2. Method according to claim 1, characterized in that the tins or tubes, before moving into the filling station (7). are brought into the desired position relative to the filling station (7) by means of the carrier elements (51).

3. Method according to claim 2, characterized in that the positioning of the tins or tubes relative to the filling station (7) is effected in the horizontal direction, and that the filling station (7) is positioned vertically.

4. Method according to claim 1, characterized in that the tins or tubes are conveyed by the gripping device (3) using vacuum suction.

5. Method according to claim 1, characterized in that the tins or tubes are held in the carrier elements (51) by vacuum suction.

6. Method according to claim 1, characterized in that a central carrier element (51) remains stationary.

7. Device for the implementation of a method according to any of claims 1 to 6, with an intermediate station (3) with holding elements (31) movable in steps, with a gripping device (4), a handover station (5) with carrier elements (51) and a ram (6),
characterized in that
the intermediate station (3) comprises an endless prism belt (30), wherein the intermediate spaces formed by the prisms represent the holding elements (31),
the carrier elements (51) can be moved towards one another, wherein one or more means (52) to define the maximum spacing of the carrier elements (51) is or are provided.

8. Device according to claim 7, characterized in that the carrier elements (51) comprise carrier plates (512) and interchangeable curved trays (510) which can be placed thereon to hold the tins or tubes.

9. Device according to claim 7, characterized in that the carrier elements (51) are connected to one another by means of a chain (52) which determines the maximum distance between the carrier elements (51).

10. Device according to claim 7, characterized in that the carrier elements (51) are movable by means of one or more pneumatically operated drive rods (53).

11. Device according to claim 7, characterized in that there are several drive rods (53), with adjacent carrier elements (51) being operated by different drive rods (53).

12. Device according to claim 7, characterized in that the intermediate station (3) and the handover station (5) are arranged in a line at right-angles to the direction of alignment of the holding (31) and carrier elements (51).

## Revendications

1. Procédé d'emballage de boîtes ou de tubes arrivant en continu, en provenance d'un dispositif de production, dans des éléments récepteurs (31), déplacés pas à pas, d'un poste intermédiaire (3) à partir duquel les boîtes ou tubes, en fonction du nombre souhaité pour une couche à emballer, sont acheminé(e)s groupé(e)s au moyen d'un dispositif de préhension (4), vers un poste de décharge où chaque tube ou boîte est déposé(e) dans un élément porteur (51), à la suite de quoi les boîtes ou tubes sont transféré(e)s ensemble des éléments porteurs dans un poste de remplissage (7),
caractérisé
en ce que les boîtes ou tubes sont placé(e)s dans les éléments récepteurs (31) selon un écart constant
en ce que les différents éléments porteurs (51) sont distancés les uns des autres suivant un écart prédéterminé, à la suite de quoi les boîtes ou tubes sont déposé(e)s dans les éléments porteurs (51) en respectant l'écart prédéterminé par les éléments récepteurs (4),
et en ce qu'ensuite, les éléments porteurs (51) sont déplacés ensemble jusqu'à ce qu'ils soient en contact les uns avec les autres, à la suite de quoi les boîtes ou tubes sont poussé(e)s dans le poste de remplissage (7).

2. Procédé selon la revendication 1, caractérisé en ce que les boîtes ou tubes, avant d'être poussé(e)s dans le poste de remplissage (7), sont amenés par les éléments porteurs (51) dans la position souhaitée par rapport au poste de remplissage (7).

3. Procédé selon la revendication 2, caractérisé en ce que le positionnement des boîtes ou tubes par rapport au poste de remplissage (7) est réalisé horizontalement, et en ce que le poste de remplissage (7) est positionné verticalement.

4. Procédé selon la revendication 1, caractérisé en ce que les boîtes ou tubes sont transporté(e)s à l'aide du dispositif de préhension (3) en étant aspiré(e)s par le vide.

5. Procédé selon la revendication 1, caractérisé en ce que les boîtes ou tubes sont maintenu(e)s dans les éléments porteurs (51) en étant aspiré(e)s par le vide.

6. Procédé selon la revendication 1, caractérisé en ce qu'un élément porteur (51) médian reste au repos.

7. Dispositif permettant la mise en oeuvre du procédé selon l'une des revendications 1 à 6, comprenant un poste intermédiaire (3) équipé d'éléments récepteurs (31) susceptibles d'être déplacés pas à pas, un dispositif de préhension (4), un poste de décharge (5) pourvu d'éléments porteurs (51) et d'une coulisse (6)
caractérisé en ce que
le poste intermédiaire (3) comprend une bande à prismes (30) sans fin, les interstices formés par les prismes constituant les éléments récepteurs (31 ),
en ce que les éléments porteurs (51) sont montés avec possibilité de déplacement les uns par rapport aux autres, au moins un moyen (52) étant prévu pour définir l'écart maximal des éléments porteurs (51) entre eux.

8. Dispositif selon la revendication 7, caractérisé en ce que les éléments porteurs (51) comprennent des plaques porteuses (512) et des coques de dépôt (510), susceptibles d'être posées dessus, susceptibles d'être changées, destinées à recevoir les boîtes ou les tubes.

9. Dispositif selon la revendication 7, caractérisé en ce que les éléments porteurs (51) sont reliés entre eux au moyen d'une chaîne (52) qui détermine l'écart maximal des éléments porteurs (51) les uns par rapport aux autres.

10. Dispositif selon la revendication 7, caractérisé en ce que les éléments porteurs (51) sont susceptibles d'être déplacés au moyen d'au moins une tige de commande (53) pneumatique.

11. Dispositif selon la revendication 7, caractérisé en ce que sont prévues plusieurs tiges de commande (53), des éléments porteurs (51) adjacents étant actionnés par différentes tiges de commande (53).

12. Dispositif selon la revendication 7, caractérisé en ce que le poste intermédiaire (3) et le poste de décharge (5) sont disposés sur une ligne, perpendiculairement à la direction de montage des éléments récepteurs (31) et porteurs (51).
